# EUROPEAN PATENT APPLICATION

(11) **EP 4 700 719 A1**
(43) Date of publication of application: **25.02.2026**
(21) Application number: 23933889.0
(22) Date of filing: 18.12.2023
(51) Int. Cl.: G06V 20/40, G06V 10/74, G06V 10/764, G06V 10/75

(54) **METHOD AND APPARATUS FOR SUPERVISING ITEMS IN FRONT OF A DOOR, INTELLIGENT DEVICE AND STORAGE MEDIUM**

(30) Priority: 21.04.2023 CN 202310457189
(71) Applicant: Hangzhou Ezviz Software Co., Ltd., Zhejiang 310051 (CN)
(72) Inventor: FENG, Xinshan, Hangzhou, Zhejiang 310051 (CN)
(74) Representative: Schmitz, Joseph
(86) International application number: PCT/CN2023/139395
(87) International publication number: WO 2024/217025

(57) **Abstract**

Embodiments of the present application provide a method and apparatus for supervising items in front of a door, an intelligent device and a storage medium. The method comprises: acquiring a video frame to be detected in an area in front of a door and an acquisition moment of said video frame; performing object detection on said video frame to obtain a current object detection result; according to the current object detection result, determining whether there is a new or missing item in the area in front of the door or not; determining whether there is a door opening event in a first preset duration before and after the acquisition moment, and if there is no door opening event, giving an alarm for the new or missing item. According to the method, limited device resources can be used in the item supervising function in a centralized mode, and after the added or missing state of an item in front of a door is determined, the identification accuracy of supervision of items in front of the door can be improved according to the door opening state. In addition, the method has the advantages of low calculation amount and energy consumption, and can save device resources.

## Description

The present application claims the priority to a Chinese patent application No. 202310457189.6 filed with the China National Intellectual Property Administration (CNIPA) on April 21, 2023 and entitled "method and apparatus for monitoring items in front of a door, intelligent device and storage medium", which is incorporated herein by reference in its entirety.

### Technical Field

The present application relates to the technical field of Internet of Things, and in particular to a method and apparatus for monitoring items in front of a door, intelligent device and storage medium.

### Background

With the development of the intelligent home field, intelligent entry products, such as an intelligent door lock, doorbell, peephole, and other products, are increasingly being applied to households or enterprises. Currently, the method for monitoring items in front of a door by the intelligent entry device typically includes: pre-establishing a human body database or facial database, and assigning a specified identity to corresponding human body or face; performing human body and face detection based on an image collected by a camera, identifying the identity of the current person, and determining and issuing an alarm for the status of an item in front of the door based on determination of the identity of the current person. However, this method has drawbacks. On the one hand, identity identification technology based on the human body is immature with low identification accuracy, leading to much false alarms. On the other hand, although face-based identification technology is relatively mature, it is susceptible to person cooperation and lighting conditions, and thus has a significantly decreased identification success rate under the obscured face, the lowered head, the profile face, or poor lighting, thereby compromising its effectiveness for the purpose of anti-theft, and resulting in low overall accuracy of alarm; moreover, face and human body identification algorithms additionally consume much resources, increasing the power consumption of intelligent devices. Therefore, there is an urgent need for a method for monitoring items in front of a door with low energy consumption and high identification accuracy.

### Summary

The purpose of the embodiments of the present application is to provide a method and apparatus for monitoring items in front of a door, intelligent device and storage medium, to solve the problems of high energy consumption and low identification accuracy in the method for monitoring the items in front of the door. The specific technical solutions are as follows.

In a first aspect, an embodiment of the present application provides a method for monitoring items in front of a door, including:
obtaining a to-be-detected video frame of an region in front of the door and an acquisition moment of the to-be-detected video frame;
performing object detection on the to-be-detected video frame to obtain a current object detection result;
determining whether there is a newly added or disappeared item in the region in front of the door according to the current object detection result;
determining whether there is a door opening event within a first preset duration before the acquisition moment and within the first preset duration after the acquisition moment; and
in response to determining that there is no door opening event, issuing an alarm for the newly added or disappeared item.

In a second aspect, an embodiment of the present application provides an apparatus for monitoring items in front of a door, including:
an obtaining module, configured to obtain a to-be-detected video frame of an region in front of the door and an acquisition moment of the to-be-detected video frame;
a detection module, configured to perform object detection on the to-be-detected video frame to obtain a current object detection result;
a determination module, configured to determine whether there is a newly added or disappeared item in the region in front of the door according to the current object detection result;
a door opening determination module, configured to determine whether there is a door opening event within a first preset duration before the acquisition moment and within the first preset duration after the acquisition moment; and
an alarm module, configured to issue an alarm for the newly added or disappeared item in response to determining that there is no door opening event.

In a third aspect, an embodiment of the present application provides an intelligent device, including:
a camera, configured to acquire a to-be-detected video frame of an region in front of a door;
a memory, configured to store a computer program;
a processor, configured to carry out the aforementioned any method for monitoring the items in front of a door when executing the program stored on the memory.

In a fourth aspect, an embodiment of the present application provides a computer-readable storage medium having stored thereon a computer program, wherein the computer program, when executed by a processor, causes the processor to carry out the any aforementioned method for monitoring the items in front of a door.

Beneficial effects of the embodiments of the present application:
the method for monitoring the items in front of a door provided by the embodiment of the present application includes: obtaining a to-be-detected video frame of an region in front of the door and an acquisition moment of the to-be-detected video frame; performing object detection on the to-be-detected video frame to obtain a current object detection result; determining whether there is a newly added or disappeared item in the region in front of the door according to the current object detection result; determining whether there is a door opening event within a first preset duration before the acquisition moment and within the first preset duration after the acquisition moment; in response to determining that there is no door opening event, issuing an alarm for the newly added or disappeared item. This method can concentrate limited device resources on the item monitoring function itself, and issue an alarm combining with whether there is a door opening event after determining the new addition or disappearance status of the item in front of the door. This is because the addition or disappearance of the item in front of the door is with the user's awareness when there is a door opening event. Compared to method of determining whether an object is moved by a user based on the human body or face identification algorithm, this method of the present application improves the identification accuracy for item monitoring in front of the door. Furthermore, this method does not need to run human body or face identification algorithm, has a low calculational load and low energy consumption and can save devices resources.

Of course, implementing any one of products or methods of the present application does not necessarily require achieving all the advantages mentioned above simultaneously.

### Brief Description of the Drawings

The accompanying drawings described here are used to provide a further understanding of the present application and constitute a part of the same. The illustrative embodiments of the present application and their descriptions are used to explain the present application and do not constitute an improper limitation of the present application.
Fig. 1 is a first schematic flow diagram of a method for monitoring items in front of a door according to an embodiment of the present application;
Fig. 2 is a second schematic flow diagram of a method for monitoring items in front of a door according to an embodiment of the present application;
Fig. 3 is a schematic flow diagram of step S103 according to an embodiment of the present application;
Fig. 4 is a schematic flow diagram of step S306 according to an embodiment of the present application;
Fig. 5 is another schematic flow diagram of step S306 according to an embodiment of the present application;
Fig. 6 is a third schematic flow diagram of a method for monitoring items in front of a door according to an embodiment of the present application;
Fig. 7 is a complete flow diagram of a method for monitoring items in front of a door according to an embodiment of the present application;
Fig. 8 is a schematic flow diagram of a multi-target tracking process in the method for monitoring items in front of a door according to an embodiment of the present application;
Fig. 9 is a schematic diagram of a multi-target tracking and matching process according to an embodiment of the present application;
Fig. 10 is a schematic flow diagram for processing an unmatched item according to an embodiment of the present application;
Fig. 11 is a schematic flow diagram of an alarm method according to an embodiment of the present application;
Fig. 12 is a schematic structure diagram of an apparatus for monitoring items in front of a door according to an embodiment of the present application;
Fig. 13 is a schematic structure diagram of an intelligent device according to an embodiment of the present application.

### Detailed Description

In order to make the objective, technical solutions and advantages of the present application clearer and more understandable, the present application will be described in more detail below with reference to the accompanying drawings and embodiments. Obviously, the described embodiments are only some, and not all, of the embodiments of the present application. All other embodiments obtained based on the embodiments of the present application by those skilled in the art fall into the scope of protection of the present application.

With the development of the intelligent home field, intelligent entry products (such as an intelligent door lock, doorbell, peephole, etc.) are increasingly being applied. The intelligent entry products can not only implement traditional functions (such as the intelligent door lock has the function of locking the door, the intelligent doorbell has the function of "knocking on the door", and the intelligent peephole eye has the function of observing outdoor conditions), but also enable monitoring of items in front of the door. Currently, the method for monitoring items in front of the door by the intelligent entry products typically includes: pre-establishing a human body library or facial library, and assigning a specified identity to corresponding human body or face; performing human body and face detection based on an image collected by a camera, identifying the identity of the current person, and determining and issuing an alarm for the status of an item in front of the door based on determination of the identity of the current person. However, this method has drawbacks. On the one hand, identity identification technology based on the human body is immature with low identification accuracy, leading to much false alarms. On the other hand, although face-based identification technology is relatively mature, it is susceptible to person cooperation and lighting conditions, and thus has a significantly decreased identification success rates under the obscured face, the lowered head, the profile face, or poor lighting, thereby compromising its effectiveness for the purpose of anti-theft, and resulting in low overall accuracy of alarm; moreover, face and human body identification algorithms additionally consume much resources, increasing the power consumption of intelligent devices. Therefore, there is an urgent need for a method for monitoring items in front of a door with low energy consumption and high identification accuracy.

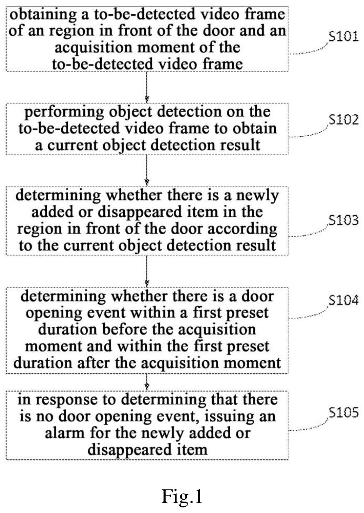

In a first aspect of the present application, a method for monitoring items in front of a door is provided. Referring to Fig. 1, the method includes:
S101: obtaining a to-be-detected video frame of an region in front of the door and an acquisition moment of the to-be-detected video frame.

The method for monitoring the items in front of a door in the embodiment of the present application is carried out through an intelligent device, and the method is specifically applicable to the intelligent door lock, intelligent doorbell, camera in front of the door, or other intelligent entry devices. The following description is made by taking application of the method to the intelligent door lock as an example. After the intelligent door lock is powered on, an operation of the device initialization is performed firstly, including initialization of normal function of the device, initialization of an event processing module, initialization of an object detection algorithm, reading the last saved historical item tracking result, etc. Since intelligent door locks on the market are mainly powered by lithium batteries or dry cells, in order to improve the battery life of the intelligent door lock, the device is typically woke up only under certain conditions in the industry, and remains in an extremely low-power sleep mode for the rest of the time. Therefore, when there is no need to consider the battery life of the intelligent door lock, the step of "reading the last saved historical item tracking result" may not be executed. However, if the device is configured to be woke up only under certain conditions in order to improve the battery life of the intelligent door lock, the trigger event that caused the device to be triggered can also be recorded; for example, the device can be configured to be woke up periodically, or manually triggered before a person leaves the house.

After completing the initialization operation of the device, the camera is activated to obtain the to-be-detected video frame the region in front of the door and records the acquisition moment of the to-be-detected video frame.

S102: performing object detection on the to-be-detected video frame to obtain a current object detection result.

The object detection is performed on the to-be-detected video frame using an object detection algorithm The object detection algorithm may be any target detection algorithm capable of detecting a person and an item, such as a target detection algorithm based on a convolutional neural network (which may be a newer algorithm in the YOLO series).

S103: determining whether there is a newly added or disappeared item in the region in front of the door according to the current object detection result.

The device read the last saved historical item tracking result during the initialization phase. According to the result of object detection performed on the currently acquired to-be-detected video frame, it can be determined whether there is the newly added or disappeared item in the region in front of the door by comparing the current object detection result with the last saved historical item tracking result.

S104: determining whether there is a door opening event within a first preset duration before the acquisition moment and within the first preset duration after the acquisition moment.

The first preset duration may be a empirically determined value, a statistically determined value, or a value configured by the user. The first preset duration can be flexibly set to adapt to different users. Since the method for monitoring the items in front of a door is performed on a frame-by-frame basis, the first preset duration can take effect when analyzing the next video frame after the user sets the first preset duration. The setting of the first preset duration can be related to sensitivity. For example, when the user sets the sensitivity to low, the first preset duration is set to 30 seconds; when the user sets the sensitivity to medium, the first preset duration is set to 20 seconds; when the user sets the sensitivity to high, the first preset duration is set to 10 seconds. The user can also set the first preset duration directly, such as directly setting the same to 5 seconds, 1 minute, etc.
in response to determining that there is a door opening event within the first preset duration before the acquisition moment and within the first preset duration after the acquisition moment, it can be considered that the addition or disappearance of the item at this time is caused by a family member, thereby filtering out a situation where the family member place or take away the item, to reduce the probability of false detection or missed alarm caused by misidentification of specific identity identification algorithms (such as human body or face identification).

S105: in response to determining that there is no door opening event, issuing an alarm for the newly added or disappeared item.

In response to determining that there is no door opening event within the first preset duration before the acquisition moment and within the first preset duration after the acquisition moment, an alarm needs to be issued for the addition or disappearance of the item at this time. The situation where the item is added or disappeared is pushed to a designated platform or user device in communication connection with the device.

The method for issuing the alarm for the newly added or disappeared item specifically includes: obtaining a current moment, and determining whether a time difference between the current moment and the acquisition moment exceeds a second preset duration; in response to determining that the time difference exceeds the second preset duration, issuing the alarm for the newly added or disappeared item; in response to determining that the time difference does not exceed the second preset duration, returning to execute the step of obtaining the to-be-detected video frame of the region in front of the door and the acquisition moment of the to-be-detected video frame. Wherein, the second preset duration may be the same as or different from the first preset duration, which is not limited in the embodiment of the present application.

The method for monitoring the items in front of a door provided by the embodiment of the present application can concentrate limited device resources on the item monitoring function itself, and issuing an alarm combining with whether there is a door opening event after determining the new addition or disappearance status of the item in front of the door. This is because the addition or disappearance of the item in front of the door is with the user's awareness when there is a door opening event. Compared to the method of determining whether an object is moved by a user based on the human body or face identification algorithm, this method of the present application improves the identification accuracy for item monitoring in front of the door. Furthermore, this method does not need to run human body or face identification algorithm, has a low calculational load and low energy consumption and can save devices resources.

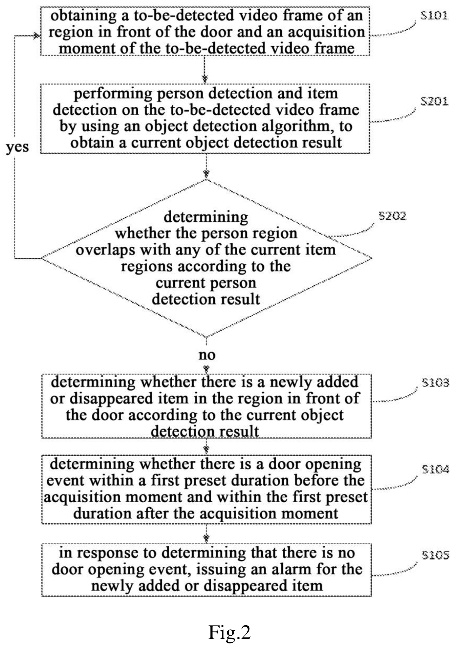

The object in the embodiments of the present application includes the item, and the current object detection result includes the current item detection result. In one example, the object may also include a person, and the current object detection result may also include a current person detection result. In one example, referring to Fig. 2, the aforementioned step S102 specifically includes:
S201: performing person detection and item detection on the to-be-detected video frame by using an object detection algorithm, to obtain a current object detection result, wherein the current object detection result includes a current person detection result and a current item detection result; the current person detection result includes a person region in the to-be-detected video frame, and the current item detection result includes current item regions in the to-be-detected video frame.

The above method further includes:
Step 202: determining whether the person region overlaps with any of the current item regions according to the current person detection result; wherein, in response to determining that the person region overlaps with any of the current item regions, it is waited to obtain a next to-be-detected video frame and then the detection is continued to be performed; in response to determining that the person region does not overlap with any of the current item regions, execution of the step of determining whether there is the newly added or disappeared item in the region in front of the door according to the current object detection result, is triggered.

It may be understood that performing person detection is to detect the person region in the video frame, which is different from the human body identification algorithm mentioned above. The human body identification algorithm includes two processes, i.e., detecting the person region and recognizing the person identity, with the computational load much higher than that for merely detecting the person region.

After performing person detection and item detection on the to-be-detected video frame by using the object detection algorithm and obtaining the person region and item regions in the to-be-detected video frame, it is determined whether the person region overlaps with any of the item regions. In response to determining that the person region overlaps with any of the item regions, subsequent steps will not be performed, and instead, it is waited to obtain the next to-be-detected video frame and then the detection is continued to be performed. It may be understood that, in the scenario of monitoring the items in front of the door, except during the process of a person placing or taking away the item, the item is stationary in front of the door. To avoid false alarms due to blocking the item by a person, and misidentifying, as the new addition or disappearance of the item, the blocking of the item by a person when the person places or takes the item away, the present application does not perform subsequent processing when it is detected that the person region overlaps with any of the item regions. Since subsequent processing steps are omitted, this action may also increase processing speed, reduce processing steps and times, thereby reducing power consumption; in such a case, the device has been recording continuously, and data loss will not occur. In response to determining that the person region does not overlap with any of the item regions, execution of the step of determining whether there is the newly added or disappeared item in the region in front of the door according to the current object detection result, is triggered.

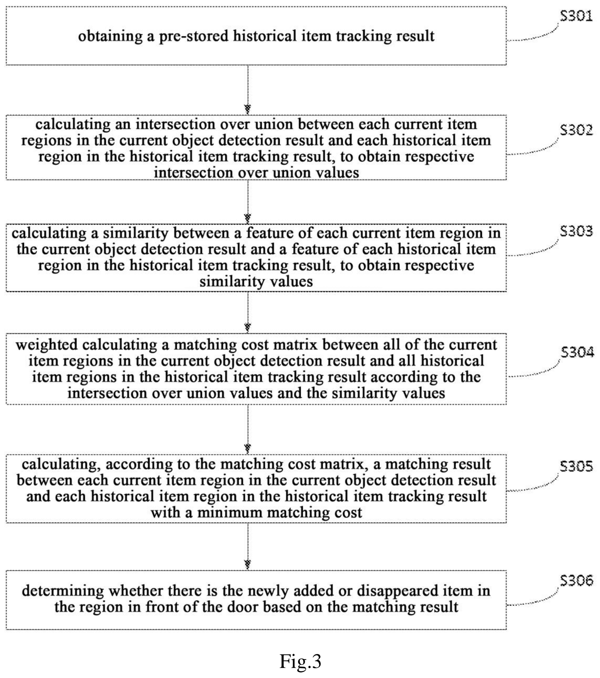

In one example, referring to Fig. 3, the aforementioned step 103 may be refined into the following steps:
S301: obtaining a pre-stored historical item tracking result.

The device reads the last saved historical item tracking result during the initialization phase. In the process of determining whether there is the newly added or disappeared item in the region in front of the door, the read historical item tracking result is obtained.

S302: calculating an intersection over union between each current item regions in the current object detection result and each historical item region in the historical item tracking result, to obtain respective intersection over union values.

The intersection over union (IOU) refers to the ratio of an overlapping area of two regions to a combined area of the two regions. It is supposed that there are M current item regions in the current object detection result, namely A1, A2, ..., AM, and there are N historical item regions in the historical item tracking result, namely B1, B2, ..., BN. For each current item region A, it is needed to calculate the value of intersection over union between the current item region A and each historical item region B.

S303: calculating a similarity between a feature of each current item region in the current object detection result and a feature of each historical item region in the historical item tracking result, to obtain respective similarity values.

For each current item region in the current object detection result, the feature of each current item is calculated. For each historical item region in the historical item tracking result, the feature of each historical item is calculated. The process of calculating item feature can be implemented through a neural network or through traditional algorithms. It is supposed that there are M current item regions in the current object detection result, namely A1, A2, ..., AM, and there are N historical item regions in the historical item tracking result, namely B1, B2, ..., BN. For each current item region A, it is needed to calculate the value of similarity between the current item region A and each historical item region B.

The embodiment of the present application does not limit the execution order of S302 and S303.

S304: weighted calculating a matching cost matrix between all of the current item regions in the current object detection result and all historical item regions in the historical item tracking result according to the intersection over union values and the similarity values.

Weights may be assigned to the intersection over union values and the similarity values according to actual situations. For each current item region in the current object detection result, weighted calculation is performed on the intersection over union values and the similarity values for the current item region, to obtain the matching cost matrix between all of the current item regions and all historical item regions in the historical item tracking result.

It is supposed that there are M current item regions in the current object detection result, namely A1, A2, ..., AM, and there are N historical item regions in the historical item tracking result, namely B1, B2, ..., BN. The constructed matching cost matrix is M rows by N columns. The value in i-th row I and j-th column of the cost matrix represents the matching cost between the i-th current item region and the j-th historical item region. This cost is calculated as follows: for example, if the intersection over union between the current item region i and the historical item region j is x (in the range of [0,1]), the feature similarity between the current item region i and the historical item region j is y (in the range of [0,1]), the weight for the intersection over union is a, and the weight for the feature similarity is b (b=1-a), then the matching cost between item i and item j is 1-(ax + by). That is, the larger the intersection over union value and the higher the feature similarity value is, the smaller the matching cost is.

In the scenario of monitoring the items in front of the door, the items are basically in a stationary status except in a period during which the items are being moved or placed by a person, and analysis during this period is omitted because the person region overlaps with an item region. Moreover, since the field of view of the camera of the intelligent door lock is small, and the range in which the item can be moved is small, the embodiment of the present application removes the step of predicting the position in the current frame, of an item region in the historical item tracking result, and instead, directly uses the historical item regions to calculate the matching cost matrix between the historical item regions and the current item regions and to calculate the matching result, which can reduce the computational load and power consumption.

S305: calculating, according to the matching cost matrix, a matching result between each current item region in the current object detection result and each historical item region in the historical item tracking result with a minimum matching cost.

After obtaining the matching cost matrix, the Hungarian algorithm or KM algorithm may be used to solve the matching result between each current item region in the current object detection result and each historical item region in the historical item tracking result.

S306: determining whether there is the newly added or disappeared item in the region in front of the door based on the matching result.

In the embodiment of the present application, in addition to the conventional Intersection over union (IOU) representing the positional relationship between item regions, a feature of an item in an item region is calculated, and the similarity between the feature of the item in the current item region and the feature of the item in the historical item region is calculated. The value calculated by weighting the similarity and the intersection over union is taken as the matching cost between the two item regions. Since the embodiment of the present application also calculates the similarity between item regions, even if an item is replaced but its position is similar or unchanged, higher tracking and matching accuracy for the same item may also be ensured, increasing the tracking and matching accuracy for the same item.

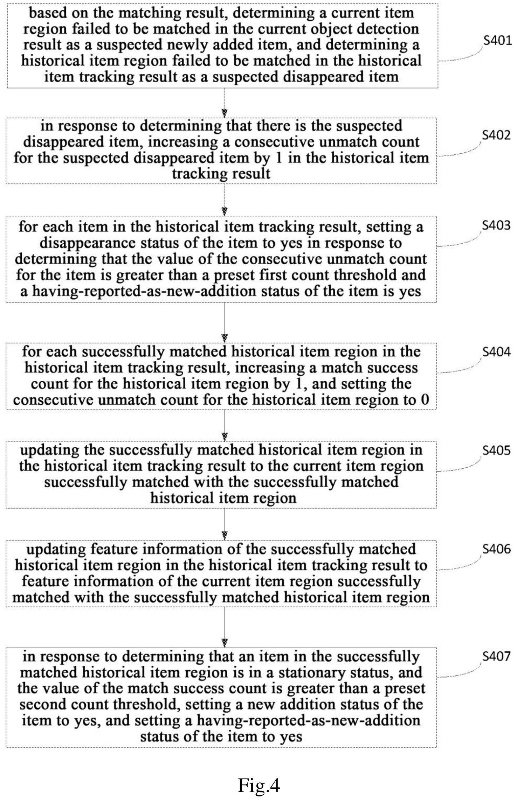

In one example, referring to Fig. 4, the aforementioned step S306 may be refined into the following steps:
S401: based on the matching result, determining a current item region failed to be matched in the current object detection result as a suspected newly added item, and determining a historical item region failed to be matched in the historical item tracking result as a suspected disappeared item.

It may be understood that, during the process of matching each current item region in the current object detection result with each historical item region in the historical item tracking result, there may be a situation where no historical item region corresponding to the current item region can be found in the historical item tracking result, or no current item region corresponding to the historical item region can be found in the current object detection result. For the situation where no historical item region corresponding to the current item region can be found in the historical item tracking result, it belongs to matching failure for the item region in the current object detection result; for the situation where no current item region corresponding to the historical item region can be found in the current object detection result, it belongs to matching failure for the item region in the historical item tracking result.

In the embodiment of the present application, the suspected newly added item and suspected disappeared item can be determined according to the matching result between each current item region in the current object detection result and each historical item region in the historical item tracking result, so that different processing measures can be taken for the suspected newly added item and the suspected disappeared item subsequently, respectively.

S402: in response to determining that there is the suspected disappeared item, increasing a consecutive unmatch count for the suspected disappeared item by 1 in the historical item tracking result.

In response to determining that item A2 in the historical item tracking result is determined to be a suspected disappeared item, the consecutive unmatch count for A2 is increased by 1, wherein the initial value of this consecutive unmatch count is 0.

S403: for each item in the historical item tracking result, setting a disappearance status of the item to yes in response to determining that the value of the consecutive unmatch count for the item is greater than a preset first count threshold and a having-reported-as-new-addition status of the item is yes.

The first count threshold may be a empirically determined value, a statistically determined value, a value determined according to algorithm analysis frame rate, etc., or a corresponding value linked to a user-configurable algorithm parameters (such as item monitoring algorithm sensitivity, item appearance or disappearance duration, etc.). The parameter can be flexibly set to adapt to different user needs. Since analysis is performed frame by frame, when the user successfully sets a new parameter, the new parameter may take effect when analyzing the next frame. For example, the first count threshold is set to 40, and the algorithm analysis frame rate is 10, wherein setting the first count threshold to 40 means that the item needs to be disappeared for 4 seconds to meet the condition. For another example, it is supposed that the algorithm sensitivity is divided into three grades: low, medium, and high. When the algorithm analysis frame rate is 10, if the user sets the sensitivity to low, the first count threshold is set to 40; if the user sets the sensitivity to medium, the first count threshold is set to 20; if the user sets the sensitivity to high, the first count threshold is set to 10.

In response to determining that the value of the consecutive unmatch count for the item is greater than the preset first count threshold, and the having-reported-as-new-addition status of the item is yes, the disappearance status of this item is set to yes, that is, it is determined that the item has disappeared. The "item disappearance" event is pushed to the event processing module where the moment when the disappearance status of the item is set to yes, the item disappearance event, the number of disappeared items, the category of the disappeared item, and the item identifier of the disappeared item, are recorded.

In the embodiment of the present application, by recording the consecutive unmatch count for the suspected disappeared item, the disappearance status of the item is set to yes in response to determining that the value of the consecutive unmatch count for the item is greater than the preset first count threshold and the having-reported-as-new-addition status of the item is yes, thereby determining the disappeared item.

S404: for each successfully matched historical item region in the historical item tracking result, increasing a match success count for the historical item region by 1, and setting the consecutive unmatch count for the historical item region to 0.

In response to determining that an item region in the current object detection result is successfully matched with an item region in the historical item tracking result, then for each successfully matched item region in the historical item tracking result, the match success count for the item region is increased by 1 and setting the consecutive unmatch count for the item region to 0. Wherein, the initial value of the match success count is 0.

S405: updating the successfully matched historical item region in the historical item tracking result to the current item region successfully matched with the successfully matched historical item region.

According to the result of successful matching between the historical item region and the current item region, this item region in the historical item tracking result is updated to the current item region successfully matched with this historical item region.

S406: updating feature information of the successfully matched historical item region in the historical item tracking result to feature information of the current item region successfully matched with the successfully matched historical item region.

According to the result of successful matching between the historical item region and the current item region, the feature information of this item region in the historical item tracking result is updated to the feature information of the current item region successfully matched with this historical item region.

S407: in response to determining that an item in the successfully matched historical item region is in a stationary status, and the value of the match success count is greater than a preset second count threshold, setting a new addition status of the item to yes, and setting a having-reported-as-new-addition status of the item to yes.

It can be determined whether the item in the item region is in the stationary status by obtaining the previous and next frames of the current to-be-detected video frame.

The second count threshold may be a empirically determined value, a statistically determined value, a value determined according to algorithm analysis frame rate, etc., or a corresponding value linked to a user-configurable algorithm parameter (such as item monitoring algorithm sensitivity, item appearance or disappearance duration, etc.). The parameter may be flexibly set to adapt to different user needs. Since analysis is performed frame by frame, after the user successfully sets a new parameter, the new parameter may take effect when analyzing the next frame. For example, the second count threshold is set to 40, and the algorithm analysis frame rate is 10, wherein setting the second count threshold to 40 means the item needs to appear for 4 seconds to meet the condition. For another example, it is supposed that the algorithm sensitivity is divided into three grades: low, medium, and high. When the algorithm analysis frame rate is 10, if the user sets the sensitivity to low, the second count threshold is set to 40; if the user sets the sensitivity to medium, the second count threshold is set to 20; if the user sets the sensitivity to high, the second count threshold is set to 10.

In response to determining that the item in the item region is in a stationary status, and the value of the match success count for the item region is greater than the preset second count threshold, the new addition status of the item is set to yes, that is, it is determined that there is a newly added item, the message about new addition of the item is reported, and the having-reported-as-new-addition status is set to yes. Furthermore, the "item new addition" event is pushed to the event processing module in which the moment when the new addition status of the item is set to yes, the item new addition event, the number of newly added items, the category of the newly added item, and the item identifier of the newly added item are recorded.

In the embodiment of the present application, the conditions for determining item addition are set. The item in the item region in the historical item tracking result is considered as a newly added item in response to determining that the item region in the historical item tracking result is successfully matched, the item is in the stationary status, and the accumulated match success count for the item region is greater than the second count threshold.

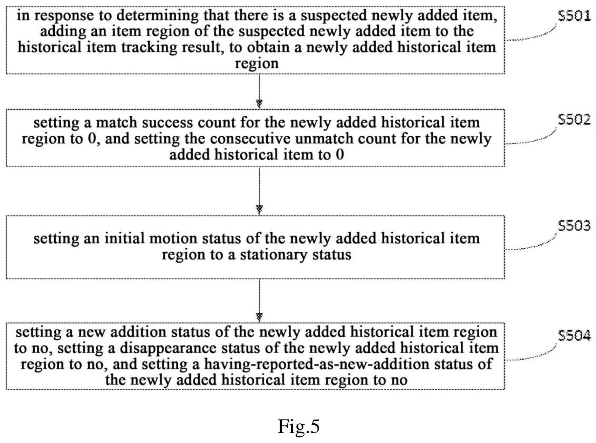

In one example, referring to Fig. 5, the aforementioned method further includes:
S501: in response to determining that there is a suspected newly added item, adding an item region of the suspected newly added item to the historical item tracking result, to obtain a newly added historical item region.

In response to determining that no historical item region matched with a current item region in the current object detection result is find in the historical item tracking result, that is, the current item region in the current object detection result failed to be matched, and the item region of the suspected newly added item is added to the historical item tracking result, thus obtaining the newly added historical item region.

S502: setting a match success count for the newly added historical item region to 0, and setting the consecutive unmatch count for the newly added historical item to 0.

The initialization operation is performed on the newly added historical item region, to set the match success count for the newly added historical item region to 0 and set the consecutive unmatch count for the newly added historical item to 0.

S503: setting an initial motion status of the newly added historical item region to a stationary status.

Since the method in the embodiment of the present application determines new addition/disappearance of the item in a case where the person region does not overlap with any of the item regions, the item is always stationary in front of the door except during the process of placing or taking away the item by a person. Therefore, the initial motion status of the newly added historical item region is the stationary status.

S504: setting a new addition status of the newly added historical item region to no, setting a disappearance status of the newly added historical item region to no, and setting a having-reported-as-new-addition status of the newly added historical item region to no.

For the newly added historical item region, since it has just been added to the historical item tracking result, the new addition status, disappearance status, and having-reported-as-new-addition status of the newly added historical item region are all set to no.

In the embodiment of the present application, in response to determining that there is a current item region failed to be matched in the current object detection result, the suspected newly added item corresponding to this item region is added to the historical item tracking result, to obtain the newly added historical item region, and corresponding parameters are set for the newly added historical item region so that the newly added historical item region becomes the to-be-matched object in subsequent matching operations.

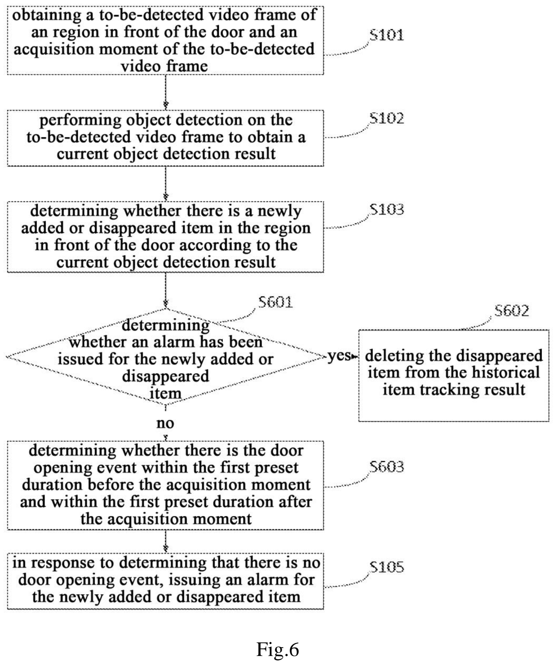

In one example, referring to Fig. 6, before the step of "determining whether there is a door opening event within the first preset duration before the acquisition moment and within the first preset duration after the acquisition moment", the aforementioned method further includes:
S601: determining whether an alarm has been issued for the newly added or disappeared item.

In response to determining that an alarm has been issued for the determined item new addition/disappearance event, there is no need to perform subsequent processing steps, and instead, it proceeds to traverse the next determined item new addition/disappearance event and perform the subsequent process on the item new addition/disappearance event for which no alarm has been issued.

S602: in response to determining that an alarm has been issued for the newly added or disappeared item, deleting the disappeared item from the historical item tracking result.

In response to determining that an alarm has been issued, the disappeared the item is deleted from the historical item tracking result, achieving an update of the historical item tracking result.

S603: in response to determining that no alarm has been issued for the newly added or disappeared item, triggering execution of the step of determining whether there is the door opening event within the first preset duration before the acquisition moment and within the first preset duration after the acquisition moment.

In the embodiment of the present application, for the disappeared item that has been reported, the disappeared the item is deleted from the historical item tracking result to achieve an update of the historical item tracking result; for the disappeared/newly added item that has not been reported, an alarm is issued for the newly added or disappeared item combining with the door opening status and the time difference between the current moment and the acquisition moment.

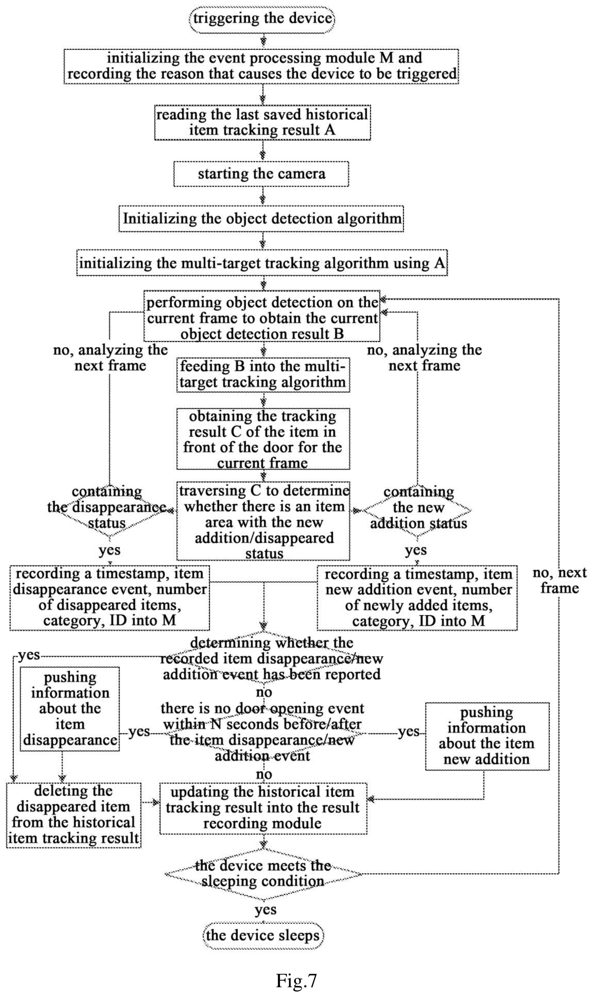

The complete process of the method for monitoring the items in front of the door in the present application is described in detail by taking Fig. 7 as an example in the following.

When the device is triggered to perform the operation of monitoring the items in front of the door, the event processing module M of the device may be initialized, and the trigger event that caused the device to be triggered is recorded; the trigger event is for example that the device reached the specified wake-up cycle, or the device was manually triggered. Then the last saved historical item tracking result A is read, and the camera is started to acquire a video frame of the region in front of the door and record the acquisition moment. The object detection algorithm is initialized, and the multi-target tracking algorithm is initialized using the last saved historical item tracking result, and object detection is performed on the current frame to obtain the current object detection result B, and B is feed into the multi-target tracking algorithm to obtain the tracking result C of the item in front of the door for the current frame. If C contains an item region with the new addition status, a timestamp, an item new addition event, the number of newly added items, category of the newly added item, and ID of the of newly added item are recorded into the event processing module M. If C contains an item region with the disappearance status, a timestamp, an item disappearance event, the number of disappeared items, category of the disappeared item, and ID of the disappeared item are recorded into the event processing module M. If C contains no item region with the new addition/disappearance status, the next frame is analyzed. In one example, the event processing module can be a software module running in the processor of the device. The processor here may be a System on Chip (SoC) or Microcontroller Unit (MCU), etc. In one example, the event processing module may be an integrated circuit for implementing corresponding functions, such as an Application Specific Integrated Circuit (ASIC), Field-Programmable Gate Array (FPGA), or Single-Chip Microcomputer, etc.

If C contains the item region with the new addition/disappearance status, it is determined whether the recorded item disappearance/new addition event has been reported. If the recorded item disappearance/new addition event has been reported, the disappeared item is deleted from the historical item tracking result; if the recorded item disappearance/new addition event has not been reported, it is determined whether there is a door opening event within N seconds before the item disappearance/new addition event and within N seconds after the item disappearance/new addition event. If there is no door opening event within N seconds before the item disappearance/new addition event and within N seconds after the item disappearance/new addition event, information about the occurred item new addition/disappearance needs to be pushed, and the disappeared item is deleted from the historical item tracking result after the information about the item disappearance is pushed. If there is a door opening event within N seconds before the item disappearance/new addition event and within N seconds after the item disappearance/new addition event, the message about the item new addition/disappearance will not be pushed, and only the historical item tracking result is updated into the result recording module. It is determined whether the device meets a sleep condition; if the device meets the sleep condition, the device enters sleep mode, which may minimize power consumption of the device to the greatest extent; if the device does not meet the sleep condition, it proceeds to analyze the next frame. In one example, the recording module may be an independent hardware storage unit in the device, or the recording module may be an allocated storage region in the hardware storage unit in the device by using a software program; the hardware storage unit here may be a memory or hard disk, etc.

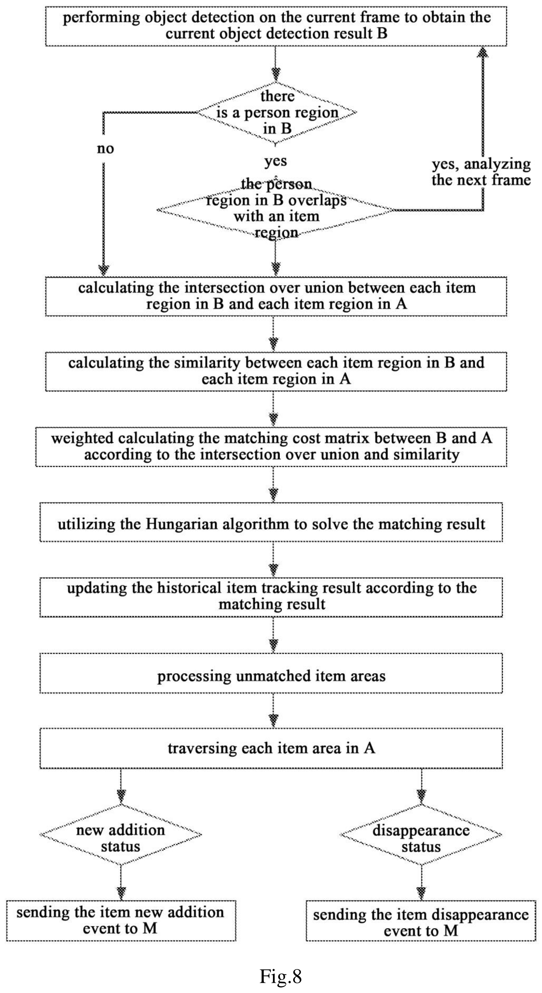

The multi-target tracking process in the method for monitoring the items in front of the door is described in detail by taking Fig. 8 as an example in the following.

The object detection is performed on the current frame to obtain the current object detection result B, and it is determined whether B contains a person region. If B does not contain a person region, the intersection over union between the current object detection result B and the historical item tracking result A may be directly calculated; if B contains a person region, it is further determined whether the person region in B overlaps with an item region. If the person region in B overlaps with an item region, no further processing is performed on the current frame, and instead the next frame is analyzed; if the person region in B does not overlap with any item region, the intersection over union between the current object detection result B and the historical item tracking result A is calculated. The similarity between the current object detection result B and the historical item tracking result A is calculated. The matching cost matrix between B and A is calculated by weighting according to the intersection over union and the similarity. The matching result between B and A is calculated by using the Hungarian algorithm. It may be understood that the matching result includes matching failure and matching success. For matching failure, there are a case where there is an item in B but there is no item in A, and a case where there is no item in B but there is an item in A. The historical item tracking result can be updated according to the matching result, and the unmatched item region is processed. All item regions in A are traversed, and the status of each item region in A is determined, thereby determining an item region with the new addition status and an item region with the disappearance status, and pushing the item new addition/disappearance event to M.

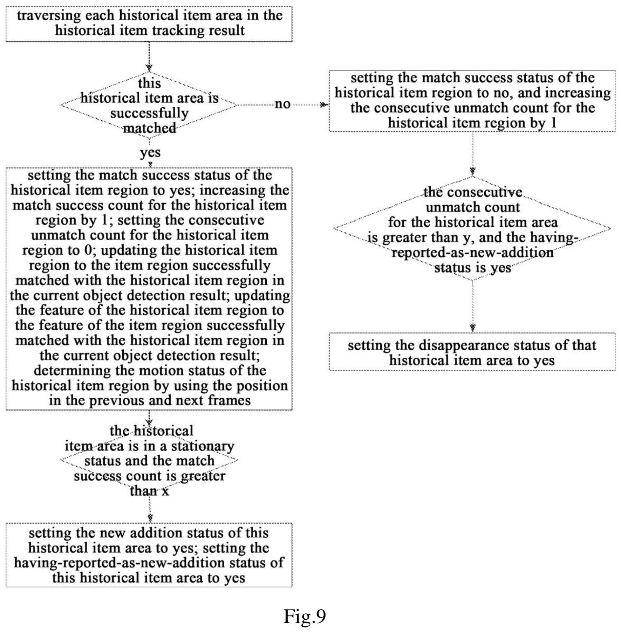

The multi-target tracking and matching process in the present application is described in detail by taking Fig. 9 as example in the following.

Each historical item region in the historical item tracking result is traversed, and the matching result for each historical item region is determined. When the historical item region is successfully matched, match success status of the historical item region is set to yes; the match success count for the historical item region is increased by 1; the consecutive unmatch count for the historical item region is set to 0; the historical item region is updated to the item region successfully matched with the historical item region in the current object detection result; the feature of the historical item region is updated to the feature of the item region successfully matched with the historical item region in the current object detection result; the motion status of the historical item region is determined by using the position in the previous and next frames. When the historical item region is in a stationary status and the match success count for the historical item region is greater than x, the new addition status of the historical item region is set to yes, and the having-reported-as-new-addition status of the historical item region is set to yes. x may be a empirically determined value, a statistically determined value, a value determined according to algorithm analysis frame rate, etc., or a corresponding numerical value linked to a user-configurable algorithm parameter (such as item monitoring algorithm sensitivity, item appearance or disappearance duration, etc.). The parameter may be flexibly set to adapt to different user needs. Since analysis is performed frame by frame, when the user successfully sets a new parameter, the new parameter can take effect when analyzing the next frame. For example, x is set to 40, and the algorithm analysis frame rate is 10, wherein setting x to 40 means that the item needs to appear for 4 seconds to meet the condition. For another example, it is supposed that the algorithm sensitivity is divided into three grades: low, medium, and high. When the algorithm analysis frame rate is 10, if the user sets the sensitivity to low, x is set to 40; if the user sets the sensitivity to medium, x is set to 20; if the user sets the sensitivity to high, x is set to 10. When that historical item region failed to be matched, match success status of the historical item region is set to no, and the consecutive unmatch count for the historical item region is increased by 1. When the consecutive unmatch count for the historical item region is greater than y and the having-reported-as-new-addition status is yes, the disappearance status of the historical item region is set to yes. y may be a empirically determined value, a statistically determined value, a value determined according to algorithm analysis frame rate, etc., or a corresponding value linked to a user-configurable algorithm parameter (such as item monitoring algorithm sensitivity, item appearance or disappearance duration, etc.). The parameter may be flexibly set to adapt to different user needs. Since analysis is performed frame by frame, when the user successfully sets a new parameter, the new parameter may take effect when analyzing the next frame. For example, y is set to 40, and the algorithm analysis frame rate is 10, wherein setting y to 40 means that the item needs to disappear for 4 seconds to meet the condition. For another example, it is supposed that the algorithm sensitivity is divided into three grades: low, medium, and high. When the algorithm analysis frame rate is 10, if the user sets the sensitivity to low, y is set to 40; if the user sets the sensitivity to medium, y is set to 20; if the user sets the sensitivity to high, y is set to 10.

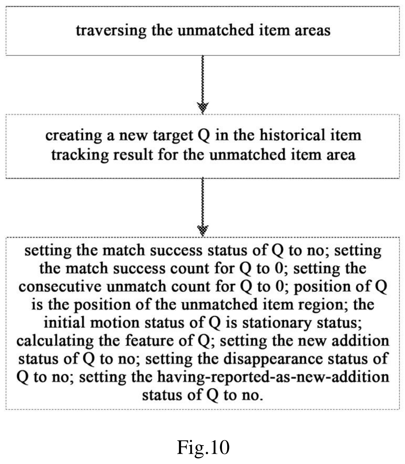

The unmatch cases in the present application is described in detail by taking Fig. 10 as an example in the following.

When there is an item region in the current object detection result but there is no item region corresponding to the item region in the historical item tracking result, matching fails. For an item region, it means the item region fails to be matched with any corresponding item region. The unmatched item region in the current object detection result is traversed; a new target Q is created in the historical item tracking result for the unmatched item region; the match success status of Q is set to no; the match success count for Q is set to 0; the consecutive unmatch count for Q is set to 0; position of Q is the position of the unmatched item region; the initial motion status of Q is stationary status; the feature of Q is calculated; the new addition status of Q is set to no; the disappearance status of Q is set to no; having-reported-as-new-addition status of Q is set to no.

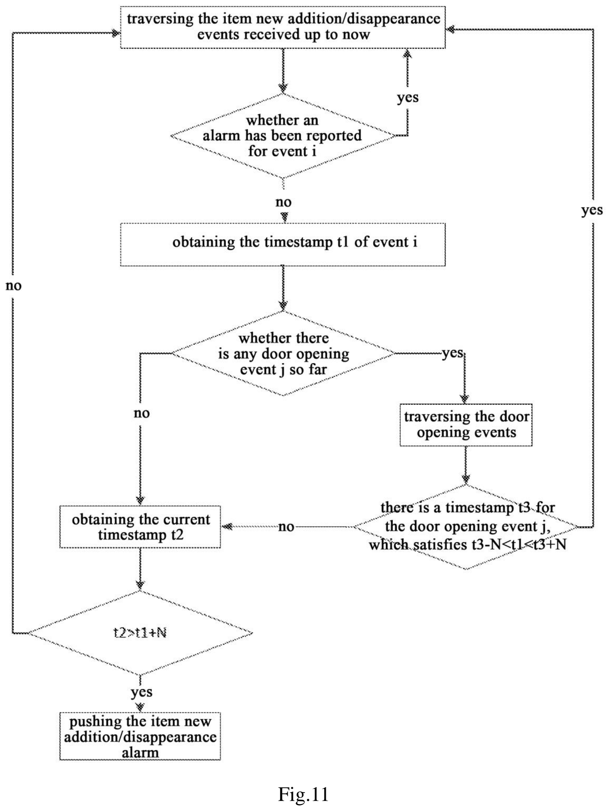

The alarming method in the present application is described in detail by taking Fig. 11 as an example in the following.

After determining the item new addition/disappearance event, the item new addition/disappearance events received up to now are traversed, and it is determined whether an alarm has been reported for event i. The method in the embodiment of the present application only issues an alarm for the item new addition/disappearance event for which no alarm has been issued. When it is determined that no alarm has been reported for the current item new addition/disappearance event, the timestamp t1 of event i is obtained, and it is determined whether there is a door opening event j so far. If there is a door opening event so far, the door opening event is traversed to determine whether t3-N < t1 < t3+N, where t3 refers to the timestamp of the door opening event. If there is a door opening event, no alarm will be issued for the item new addition/disappearance event. If there is no door opening event, or if there is a door opening event but the timestamp t3 of the door opening event does not satisfy t3-N < t1 < t3+N, the current timestamp t2 is obtained. When t2 > t1+N is established, the item new addition/disappearance alarm is pushed. Preferably, N is a natural number, with the unit being seconds.

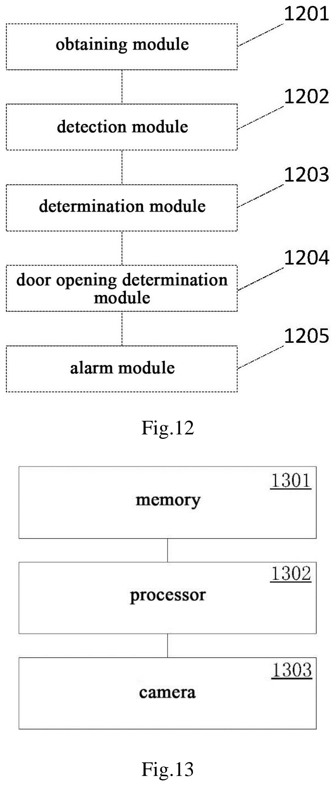

In a second aspect, an embodiment of the present application provides an apparatus for monitoring items in front of a door. Referring to Fig. 12, the apparatus includes:
an obtaining module 1201, configured to obtain a to-be-detected video frame of an region in front of the door and an acquisition moment of the to-be-detected video frame;
a detection module 1202, configured to perform object detection on the to-be-detected video frame to obtain a current object detection result;
a determination module 1203, configured to determine whether there is a newly added or disappeared item in the region in front of the door according to the current object detection result;
a door opening determination module 1204, configured to whether there is a door opening event within a first preset duration before the acquisition moment and within the first preset duration after the acquisition moment;
an alarm module 1205, configured to issue an alarm for the newly added or disappeared item in response to determining that there is no door opening event.

In one example, the detection module includes:
an object detection sub-module, configured to perform person detection and item detection on the to-be-detected video frame by using an object detection algorithm, to obtain the current object detection result, wherein the current object detection result comprises a current person detection result and a current item detection result; the current person detection result comprises a person region in the to-be-detected video frame, and the current item detection result comprises current item regions in the to-be-detected video frame;
the apparatus further includes:
   an region overlap determination module, configured to determine whether the person region overlaps with any of the current item regions according to the current person detection result;
   a video frame re-obtaining module, configured to wait to obtain a next to-be-detected video frame and then continue to perform detection in response to determining that the person region overlaps with any of the current item regions;
   in response to determining that the person region does not overlap with any of the current item regions, execution of the determination module to determine whether there is the newly added or disappeared item in the region in front of the door according to the current object detection result, is triggered.

In one example, the determination module includes:
a historical item tracking result obtaining module, configured to obtain a pre-stored historical item tracking result;
an intersection over union calculation module, configured to calculate an intersection over union between each current item region in the current object detection result and each historical item region in the historical item tracking result, to obtain respective intersection over union values;
a similarity calculation module, configured to calculate a similarity between a feature of each current item region in the current object detection result and a feature of each historical item region in the historical item tracking result, to obtain respective similarity values;
a matching cost matrix calculation module, configured to weighted calculate a matching cost matrix between all of the current item regions in the current object detection result and all historical item regions in the historical item tracking result according to the intersection over union values and the similarity values;
a matching result calculation module, configured to calculate, according to the matching cost matrix, a matching result between each current item region in the current object detection result and each historical item region in the historical item tracking result with a minimum matching cost;
a determination sub-module, configured to determine whether there is the newly added or disappeared item in the region in front of the door based on the matching result.

In one example, the determination sub-module specifically includes:
a suspected newly added item and suspected disappeared item determination sub-module, configured to determine, based on the matching result, a current item region failed to be matched in the current object detection result as a suspected newly added item, and determining a historical item region failed to be matched in the historical item tracking result as a suspected disappeared item;
an unmatch count counting module, configured to increase a consecutive unmatch count for the suspected disappeared item by 1 in the historical item tracking result in response to determining that there is the suspected disappeared item;
a disappeared item setting module, configured to, for each item in the historical item tracking result, set a disappearance status of the item to yes in response to determining that a value of the consecutive unmatch count for the item is greater than a preset first count threshold and a having-reported-as-new-addition status of the item is yes;
a match success count counting module, configured to, for each successfully matched historical item region in the historical item tracking result, increase a match success count for the historical item region by 1;
a consecutive unmatch count reset module, configured to, for each successfully matched historical item region in the historical item tracking result, set the consecutive unmatch count for the historical item region to 0;
an item region update module, configured to update the successfully matched historical item region in the historical item tracking result to a current item region successfully matched with the successfully matched historical item region;
a feature update module, configured to update feature information of the successfully matched historical item region in the historical item tracking result to feature information of the current item region successfully matched with the successfully matched historical item region;
an added item setting module, configured to, in response to determining that an item in the successfully matched historical item region is in a stationary status and a value of the match success count is greater than a preset second count threshold, set a new addition status of the item to yes, and set a having-reported-as-new-addition status of the item to yes.

In one example, the apparatus further includes:
a creation module, configured to add an item region of the suspected newly added item to the historical item tracking result to obtain a newly added historical item region in response to determining that there is the suspected newly added item,;
a match success count for the historical item region counting module, configured to set the match success count for the newly added historical item region to 0;
a continuous unmatch count for the historical item region counting module, configured to set the consecutive unmatch count for the newly added historical item region to 0;
a stationary status setting module, configured to set an initial motion status of the newly added historical item region to a stationary status ;
a setting status to no module, configured to set a new addition status of the newly added historical item region to no, set a disappearance status of the newly added historical item region to no, and set a having-reported-as-new-addition status of the newly added historical item region to no.

In one example, the apparatus further includes:
an alarm determination module, configured to determine whether an alarm has been issued for the newly added or disappeared item;
a deletion module, configured to delete the disappeared item from the historical item tracking result in response to determining that an alarm has been issued for the newly added or disappeared item;
in response to determining that no alarm has been issued for the newly added or disappeared item, execution of the door opening determination module is triggered to determine whether there is the door opening event within the first preset duration before the acquisition moment and within the first preset duration after the acquisition moment;
the alarm module includes:
   a time difference determination module, configured to obtain a current moment, and determine whether a time difference between the current moment and the acquisition moment exceeds a second preset duration;
   an alarm sub-module, configured to issue the alarm for the newly added or disappeared item in response to determining that the time difference exceeds the second preset duration;
   in response to determining that the time difference does not exceed the second preset duration, it is returned to execute of the obtaining module to obtain the to-be-detected video frame of the region in front of the door and the acquisition moment of the to-be-detected video frame.

In the technical solutions of the present application, operations involving in the obtaining, storage, use, processing, transmission, provision, and disclosure of user personal information are all performed when user authorization has been obtained.

In a third aspect, an embodiment of the present application provides an intelligent device, as shown in Fig. 13, including:
a memory 1301, configured to store a computer program;
a processor 1302, configured to carry out the aforementioned any method for monitoring the items in front of a door when executing the program stored in the memory 1301.
a camera 1303, configured to acquire a to-be-detected video frame of an region in front of the door.

Furthermore, the aforementioned intelligent device may further include a communication bus and/or communication interface, and the processor 1302, the communication interface, and the memory 1301 communicate with each other through the communication bus.

In one example, the memory is further configured to store a historical item tracking result;
the processor is further configured to, after the intelligent device is triggered, initialize an event processing algorithm and record a trigger reason of the intelligent device; read a last saved historical item tracking result from the memory; trigger the camera to acquire the to-be-detected video frame of the region in front of the door; initialize an object detection algorithm; initialize a target tracking algorithm based on the read historical item tracking result.

In one example, the intelligent device is any one of an intelligent security door, an intelligent door lock, an intelligent doorbell, an intelligent peephole, or a camera. Wherein, the intelligent security door, intelligent door lock, intelligent doorbell, and intelligent peephole can each be a device integrated with a camera. In other examples, the intelligent device may also be externally connected to a camera, so as to achieve acquiring of the image of the region in front of the door.

The communication bus mentioned for the above intelligent device can be a Peripheral Component Interconnect (PCI) bus or an Extended Industry Standard Architecture (EISA) bus, etc. The communication bus can be divided into an address bus, a data bus, a control bus and so on. For ease of presentation, only a thick line is shown in the figure, but this does not mean that there is only one bus or one type of bus.

The communication interface is configured for communication between the aforementioned intelligent device and other devices.

The memory may include a Random Access Memory (RAM) or a Non-Volatile memory (NVM), such as at least one disk memory. Optionally, the memory may also be at least one storage device located away from the processor.

The above processor may be a general-purpose processor, including a Central Processing Unit (CPU), a Network Processor (NP), etc.; it may also be a Digital Signal Processor (DSP), an Application Specific Integrated Circuit (ASIC), a Field-Programmable Gate Array (FPGA) or other programmable logic devices, discrete gates or transistor logic devices, discrete hardware components.

In yet another embodiment provided by the present application, a computer-readable storage medium is further provided, having stored thereon a computer program, wherein the computer program, when executed by a processor, carries out the aforementioned any method for monitoring the items in front of a door.

In yet another embodiment provided by the present application, a computer program product containing instructions is further provided, which, when running on a computer, cause the computer to carry out the any method for monitoring the items in front of a door described in the above embodiments.

In the above embodiments, it may be implemented in whole or in part by software, hardware, firmware or any combination thereof. When implemented in software, it can be implemented in whole or in part in the form of a computer program product. The computer program product includes one or more computer instructions. When the computer program instructions are loaded and executed on a computer, the processes or functions described in the embodiments of the present application are generated in whole or in part. The computer may be a general purpose computer, special purpose computer, computer network, or other programmable device. The computer instructions may be stored in a computer readable storage medium or transmitted from one computer readable storage medium to another computer readable storage medium, for example, the computer instructions may be transmitted from a website, computer, server or data center to another website, computer, server, or data center by wire (such as coaxial cable, fiber optic, digital subscriber line (DSL)) or wirelessly (such as infrared, wireless, microwave, etc.). The computer-readable storage medium may be any available medium that can be accessed by a computer or a data storage device such as a server and a data center and the like that includes an integration of one or more available medium. The available medium may be magnetic media (such as a floppy disk, a hard disk, a magnetic tape), optical media (such as DVD), or solid-state disk (SSD) and the like.

It should be noted that in this article, relational terms such as first and second are only to distinguish one entity or operation from another, and do not necessarily require or imply any actual relationship or order between these entities or operations. Moreover, the terms "include", "contain", or any other variation thereof are intended to encompass a non-exclusive inclusion, such that a process, method, article, or device that includes a series of elements not only includes those elements, but also other elements that are not explicitly listed, or also include elements inherent in such a process, method, article, or device. Without further limitations, the elements limited by the statement "including one..." do not exclude the existence of other identical elements in the process, method, article, or device that includes the elements.

The various embodiments in this specification are described in a relevant manner, and the same or similar parts between the various embodiments can be referred to each other, and each embodiment focuses on the differences from other embodiments. In particular, for the embodiment of the apparatus, since the embodiment is basically similar to the embodiments of the method, the description is relatively simple, and the relevant points can be referred to the partial description of the embodiments of the method.

The above descriptions are only preferred embodiments of the present application and are not intended to limit the present application. Any modifications, equivalent replacements, improvements, etc. made within the spirit and principles of the present application should be included within the scope of protection of the present application.

## Claims

1. A method for monitoring items in front of a door, comprising:
obtaining a to-be-detected video frame of an region in front of the door and an acquisition moment of the to-be-detected video frame;
performing object detection on the to-be-detected video frame to obtain a current object detection result;
determining whether there is a newly added or disappeared item in the region in front of the door according to the current object detection result;
determining whether there is a door opening event within a first preset duration before the acquisition moment and within the first preset duration after the acquisition moment; and
in response to determining that there is no door opening event, issuing an alarm for the newly added or disappeared item.

2. The method according to claim 1, wherein performing the object detection on the to-be-detected video frame to obtain the current object detection result, comprising:
performing person detection and item detection on the to-be-detected video frame by using an object detection algorithm, to obtain the current object detection result, wherein the current object detection result comprises a current person detection result and a current item detection result; the current person detection result comprises a person region in the to-be-detected video frame, and the current item detection result comprises current item regions in the to-be-detected video frame;
wherein the method further comprises:
determining whether the person region overlaps with any of the current item regions according to the current person detection result; wherein, in response to determining that the person region overlaps with any of the current item regions, it is waited to obtain a next to-be-detected video frame and then the detection is continued to be performed; in response to determining that the person region does not overlap with any of the current item regions, execution of a step of determining whether there is the newly added or disappeared item in the region in front of the door according to the current object detection result, is triggered.

3. The method according to claim 1, wherein determining whether there is the newly added or disappeared item in the region in front of the door according to the current object detection result, comprises:
obtaining a pre-stored historical item tracking result;
calculating an intersection over union between each current item region in the current object detection result and each historical item region in the historical item tracking result, to obtain respective intersection over union values;
calculating a similarity between a feature of each current item region in the current object detection result and a feature of each historical item region in the historical item tracking result, to obtain respective similarity values;
weighted calculating a matching cost matrix between all of the current item regions in the current object detection result and all historical item regions in the historical item tracking result according to the intersection over union values and the similarity values;
calculating, according to the matching cost matrix, a matching result between each current item region in the current object detection result and each historical item region in the historical item tracking result with a minimum matching cost; and
determining whether there is the newly added or disappeared item in the region in front of the door based on the matching result.

4. The method according to claim 3, wherein determining whether there is the newly added or disappeared item in the region in front of the door based on the matching result, comprises:
based on the matching result, determining a current item region failed to be matched in the current object detection result as a suspected newly added item, and determining a historical item region failed to be matched in the historical item tracking result as a suspected disappeared item;
in response to determining that there is the suspected disappeared item, increasing a consecutive unmatch count for the suspected disappeared item by 1 in the historical item tracking result;
for each item in the historical item tracking result, setting a disappearance status of the item to yes in response to determining that a value of the consecutive unmatch count for the item is greater than a preset first count threshold and a having-reported-as-new-addition status of the item is yes;
for each successfully matched historical item region in the historical item tracking result, increasing a match success count for the historical item region by 1, and setting the consecutive unmatch count for the historical item region to 0;
updating the successfully matched historical item region in the historical item tracking result to a current item region successfully matched with the successfully matched historical item region;
updating feature information of the successfully matched historical item region in the historical item tracking result to feature information of the current item region successfully matched with the successfully matched historical item region;
in response to determining that an item in the successfully matched historical item region is in a stationary status and a value of the match success count is greater than a preset second count threshold, setting a new addition status of the item to yes, and setting a having-reported-as-new-addition status of the item to yes.

5. The method according to claim 4, wherein the method further comprises:
in response to determining that there is the suspected newly added item, adding an item region of the suspected newly added item to the historical item tracking result, to obtain a newly added historical item region;
setting a match success count for the newly added historical item region to 0, and setting a consecutive unmatch count for the newly added historical item region to 0;
setting an initial motion status of the newly added historical item region to a stationary status;
setting a new addition status of the newly added historical item region to no, setting a disappearance status of the newly added historical item region to no, and setting a having-reported-as-new-addition status of the newly added historical item region to no.

6. The method according to claim 1, wherein before determining whether there is the door opening event within the first preset duration before the acquisition moment and within the first preset duration after the acquisition moment, the method further comprises:
determining whether an alarm has been issued for the newly added or disappeared item;
in response to determining that an alarm has been issued for the newly added or disappeared item, deleting the disappeared item from the historical item tracking result;
in response to determining that no alarm has been issued for the newly added or disappeared item, triggering execution of determining whether there is the door opening event within the first preset duration before the acquisition moment and within the first preset duration after the acquisition moment;
wherein issuing the alarm for the newly added or disappeared item comprises:
obtaining a current moment, and determining whether a time difference between the current moment and the acquisition moment exceeds a second preset duration;
in response to determining that the time difference exceeds the second preset duration, issuing the alarm for the newly added or disappeared item;
in response to determining that the time difference does not exceed the second preset duration, returning to execute an operation of obtaining the to-be-detected video frame of the region in front of the door and the acquisition moment of the to-be-detected video frame.

7. An apparatus for monitoring items in front of a door, comprising:
an obtaining module, configured to obtain a to-be-detected video frame of an region in front of the door and n acquisition moment of the to-be-detected video frame;
a detection module, configured to perform object detection on the to-be-detected video frame to obtain a current object detection result;
a determination module, configured to determine whether there is a newly added or disappeared item in the region in front of the door according to the current object detection result;
a door opening determination module, configured to determine whether there is a door opening event within a first preset duration before the acquisition moment and within the first preset duration after the acquisition moment; and
an alarm module, configured to issue an alarm for the newly added or disappeared item in response to determining that there is no door opening event.

8. A intelligent device, comprising:
a camera, configured to acquire a to-be-detected video frame of an region in front of a door;
a memory, configured to store a computer program;
a processor, configured to carry out the method according to any one of claims 1-6 when executing the program stored in the memory.

9. The intelligent device according to claim 8, wherein the memory is further configured to store a historical item tracking result;
the processor is further configured to, after the intelligent device is triggered, initialize an event processing algorithm and record a trigger reason of the intelligent device; read a last saved historical item tracking result from the memory; trigger the camera to collect the to-be-detected video frame of the region in front of the door; initialize an object detection algorithm; initialize a target tracking algorithm based on the read historical item tracking result.

10. The intelligent device according to claim 8, wherein the intelligent device is any one of an intelligent security door, an intelligent door lock, an intelligent doorbell, an intelligent peephole, or a camera.

11. A computer-readable storage medium having stored thereon a computer program, wherein the computer program, when executed by a processor, causes the processor to carry out the method according to any one of claims 1-6.
